(19) Europäisches Patentamt

European Patent Office

Office européen des brevets

(11) EP 0 698 990 B1

(12) EUROPEAN PATENT SPECIFICATION

(45) Date of publication and mention
of the grant of the patent:
**17.02.1999 Bulletin 1999/07**

(51) Int Cl.$^6$: **H04N 1/00**, G06T 5/20

(21) Application number: **94830408.4**

(22) Date of filing: **25.08.1994**

(54) **Fuzzy device for image noise reduction**

Unscharfes Verfahren zur Bildrauschverringerung

Dispositif flou pour la réduction du bruit dans l'image

(84) Designated Contracting States:
**DE FR GB IT**

(43) Date of publication of application:
**28.02.1996 Bulletin 1996/09**

(73) Proprietors:
• **STMicroelectronics S.r.l.
20041 Agrate Brianza (Milano) (IT)**
• **Consorzio per la Ricerca sulla
Microelettronica nel Mezzogiorno - CoRiMMe
95100 Catania (IT)**

(72) Inventors:
• **Pennino, Laura
34100 Trieste (IT)**
• **Mancuso, Massimo
92026 Favara (IT)**
• **Travaglia, Federico
20154 Milano (IT)**
• **Poluzzi, Rinaldo
20125 Milano (IT)**
• **Rizzotto, Gianguido
22040 Civate (IT)**

(74) Representative: **Modiano, Guido, Dr.-Ing. et al
Modiano & Associati SpA
Via Meravigli, 16
20123 Milano (IT)**

(56) References cited:
**EP-A- 0 398 861**

• **PROCEEDINGS OF THE INTERNATIONAL
CONFERENCE ON FUZZY SYTEMS ,MARCH
8-12,1992 ,SAN DIEGO (US) ;IEEE PRESS ,NEW
YORK (US) pages 561 - 568, XP342921 FABRIZIO
RUSSO 'A user-friendly research tool for image
processing with fuzzy rules'**
• **PROCEEDINGS OF EUSIPCO-92 SIXTH
EUROPEAN SIGNAL PROCESSING
CONFERENCE ,BRUSSELS,BELGIUM, AUGUST
24-27,1992 ;ELSEVIER ,AMSTERDAM (NL)
pages 1413 - 1416, XP356507 FABRIZIO RUSSO
ET AL. 'Working on image data using fuzzy rules'**

## Description

The present invention relates to a fuzzy device for image noise reduction, better known as a smoother.

As is known, an important problem in the image elaboration field is represented by the implementation of special filters, both linear and non linear, suitable to perform noise reduction.

Within the non linear techniques, several filters based on the Fuzzy Set Theory have been implemented. These filters can distinguish the useful signal information from the noise by means of grammatical elements.

One drawback of known smoothers based on the Fuzzy Logic Theory is that they require a complex hardware implementation.

Furthermore, a very annoying and always occurrent kind of noise is represented by the gaussian noise; its effects are, in fact, difficult to distinguish from the true signal information since they do not spoil too much the gray level of a pixel under study.

Therefore, one of the main problems in the implementation of these kind of smoothers is the choice between the accomplishment of a filter with good noise reduction features, but with small edge preserving properties, and the implementation of a smoother that maintains both high-pass information (edges) and, unfortunately, the noise effects.

From the "Proceedings of the International Conference on Fuzzy Systems, March 92, pp. 561-568, F.Russo: "A User-friendly Research Tool for Image Processing with Fuzzy Rules", it is known a general tool for developing an algorithm suitable for noise reduction which performs adaptive low-pass filtering by means of a fuzzy knowledge base: the aim of the rules of the base is to correct pixels whose values are too different from the neighbours. This is applied to all the pixels contained within a preselected window.

From EP-A-0 398 861 it is known a method for adaptively sharpening electronic images in which the edges and details of a digital image are sharpened without amplifying noise. However, the above-cited document does not refer to noise removal with edge preserving capabilities.

Therefore, a principal aim of the present invention is to provide a fuzzy device for image noise reduction suitable to provide for a good noise reduction action whilst preserving the useful high-pass information.

Within the scope of this aim, an object of the present invention is to provide a fuzzy device for image noise reduction which is simpler in architecture than known devices.

Another object of the present invention is to provide a device with good filtering performances in the homogeneous regions of an image whilst preserving and, at the same time, reducing noise effects on edge details.

Another object of the present invention is to provide a device which is highly reliable, relatively easy to manufacture, and at low costs.

This aim, these objects and others which will become apparent hereinafter, are achieved by a fuzzy device for image noise reduction, as defined in claim 1. Further characteristics and advantages of the invention will become apparent from the description of a preferred but not exclusive embodiment, illustrated only by way of a non-limitative example in the accompanying drawings, wherein:

figure 1 is a block diagram representing the device according to the present invention;
figure 2 is a block diagram representing the interface means of the device according to the present invention;
figure 2a shows the central pixel X which is being processed and the neighbouring pixels P1-P24;
figure 3 is a block diagram representing the difference means of the device according to the present invention;
figure 4 is a block diagram representing the region voter means of the device according to the present invention;
figure 5 is a block diagram representing the fuzzy flat area smoothing means of the device according to the present invention;
figure 6 is a block diagram representing the edge preserving smoothing means of the device according to the present invention;
figure 7 is an example of a set of templates employed by the device according to the present invention.

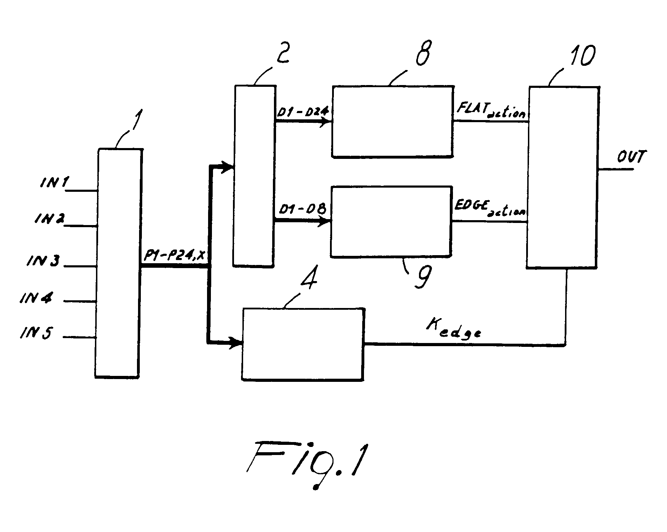

With reference to figure 1, the device is provided with interface means 1 which are adapted to receive, at their inputs IN1-IN5, not only the value of the gray level of the pixel which is being processed but also of the neighbouring pixels.

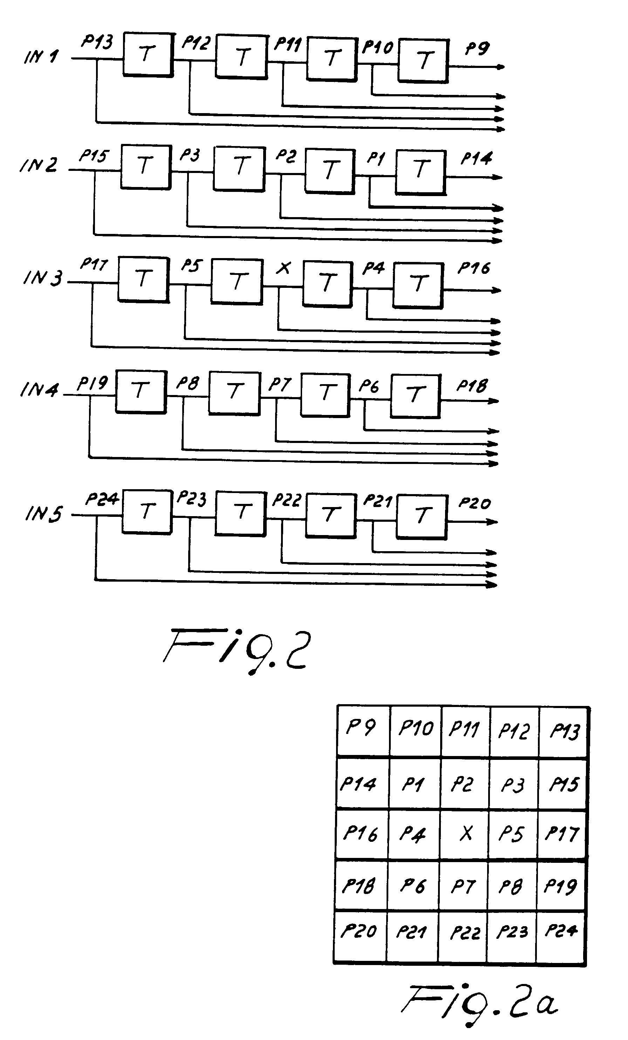

The interface means 1 are more clearly shown in figure 2. Each input IN1-IN5 is connected to a plurality of delay circuits T, five in the case of this embodiment. The outputs of the delay circuits are the gray levels for a central pixel X, which is being processed, and for the neighbouring pixels P1-P24. The neighbouring pixels P1-P24 and the central pixel X form a matrix as shown in figure 2a. The arrangement of pixels in figure 2a forms a 5x5 window or mask in the image which is being processed. The pixels have been numbered in such a way in order to easily distinguish a 3x3 sub-window formed by the pixels P1-P8 and the central pixels X, of course.

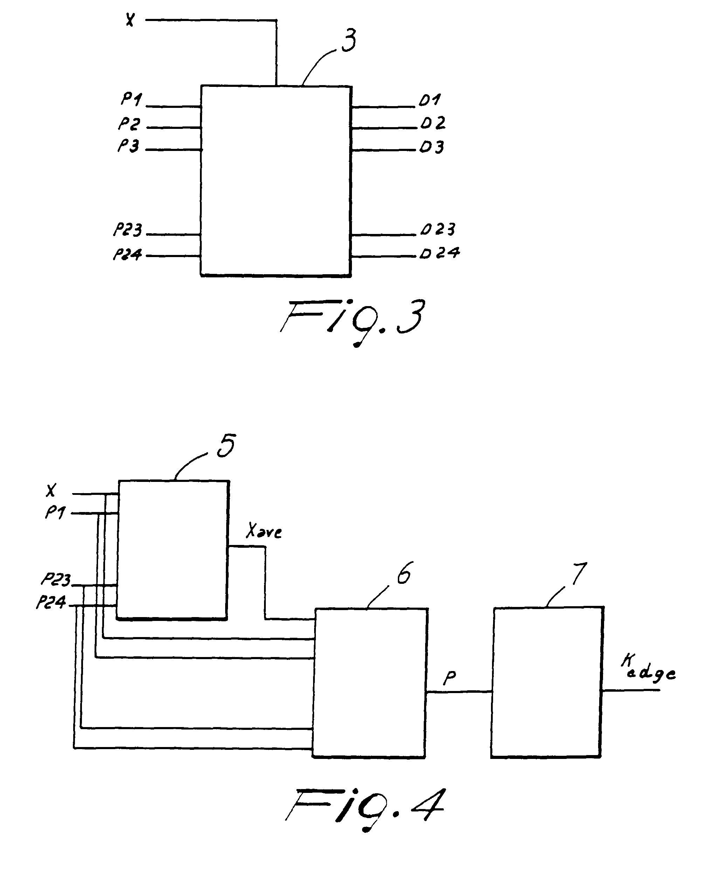

The interface means 1 are connected to difference means 2 adapted to evaluate the differences $D_i$ between the gray levels of the pixels P1-P24 belonging to the mask and the central pixel X. Values are received from the interface means 1. The difference means are more clearly shown in figure 3. The gray level values of the pixels P1-P24 and the gray level value of the central pixel are connected to a subtractor 3 which subtracts the gray value of X from the individual gray values of each pixel. The difference $D_i$ is given by

$$D_i = P_i - X, \qquad \text{for} \qquad i = 1, \ldots, 24.$$

The output of the interface means 1, constituted by the gray levels of pixels P1-P24 and of the central pixel X, is also connected to region voter means 4. The region voter means 4 are suitable to decide, according to the input parameters, whether the pixel X, which is being processed, belongs to a uniform region of the image or not. For uniform region is meant a region in which there is very little difference in gray levels between the processed pixel and the neighbouring ones. The membership grade is expressed in the interval [0,1]. According to this grade two smoothing actions are performed: Fuzzy Flat Area Smoothing and Edge Preserving Smoothing.

Since one of the aims of the present invention is to provide for a new filter with good filtering performance in the homogeneous regions of the image whilst preserving and at the same time reducing noise effects on edge details, two different actions must be implemented depending on the type of region pointed out by the processing mask of the window. For example, for a uniform (homogeneous) region a 5x5 window mask (pixels P1-P24 and X) has been adopted, whilst for the elaborating of high-pass information, a 3x3 mask (pixels P1-P8 and X) has been chosen.

Larger dimensions of the window used for the homogeneous region guarantee more information on the real structure of the image being processed. On the other hand, in order to preserve high-pass details, it is sufficient to use a smaller mask (3x3) so that the filtering action is not excessively affected by the presence of sharp differences in the gray levels.

The region voter means 4 are adapted to give a measure, expressed in the interval [0,1], for considering whether the region, outlined by a larger 5x5 mask, is homogeneous. An area type parameter p, used for evaluating the type of area being considered, in this case is expressed by

$$p = \frac{\displaystyle\sum_{i=1}^{24} |P_i - x_{ave}|}{23}$$

where $P_i$ is the gray level of each pixel and $x_{ave}$ is the average gray level of all the pixels in the mask.

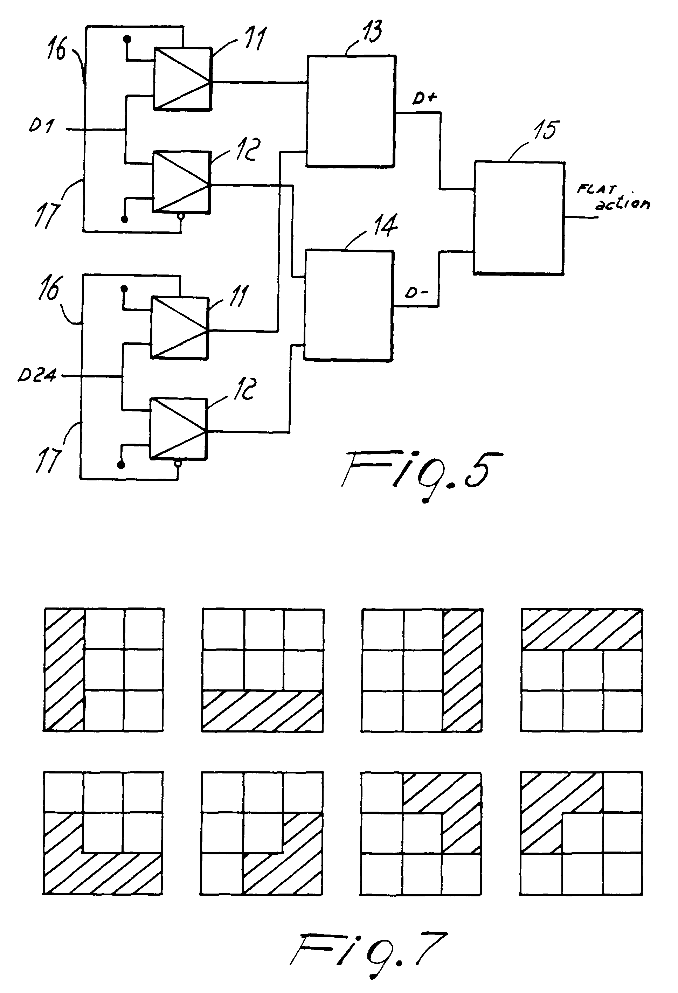

The region voter means 4 are more clearly shown in figure 4. The region voter means comprise average calculating means 5 which receive, at their inputs, the gray values of pixels P1-P24 and of pixel X and are adapted to calculate the average gray value $x_{ave}$ of such gray values. The output of the average calculating means 5, constituted by the value $x_{ave}$, is connected to the input of parameter evaluating means 6 which also receive, at its inputs, the gray values of pixels P1-P24 and X and are adapted to perform the calculation described by the above-mentioned equation in order to obtain the area type parameter p.

The output of the parameter evaluating means 6, constituted by the parameter p, is connected to fuzzy processing means 7, which are adapted to determine the degree or grade of membership to the feature (or fuzzy set) "homogeneous region". Such degree of membership $K_{edge}$ constitutes the output of the fuzzy processing means.

Of course, if parameter p is small, then the region outlined by the mask can be considered homogeneous, therefore the fuzzy processing means 7 can be implemented either by using a look-up table (off-line computation) or by employing other simple arithmetic calculations.

The two smoothing actions are performed in accordance with the output values $K_{edge}$. More specifically, Fuzzy Flat Area Smoothing is weighted with the value $K_{edge}$, whilst the Edge Preserving Smoothing is applied with the weight $(1 - K_{edge})$.

The Fuzzy Flat Area Smoothing is performed by fuzzy flat area smoothing means 8 whilst the Edge Preserving Smoothing is performed by edge preserving smoothing means 9. The weighting of the actions of the smoothing means 8 and 9 is performed by soft switching means 10, as will be described hereinafter.

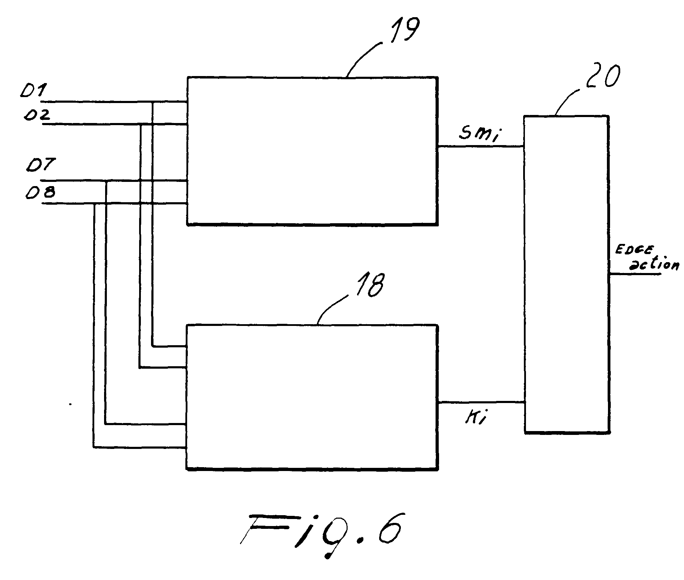

The fuzzy flat area smoothing means 8 are more clearly shown in figure 5. Such means perform a low-pass smoothing employing fuzzy IF..THEN..ELSE rules on an almost homogeneous area of the image. Since these smoothing means deal with a homogeneous region, the differences D1-D24 of the larger 5x5 mask are sent to its inputs, i.e. the smoothing action is performed while considering all the differences between the gray levels of the pixels P1-P24 belonging to the study mask and the gray level of the central pixel X of the mask, as provided by the difference means 2.

Each input D1-D24 of the fuzzy flat area smoothing means 8 is connected to a pair of multiplexers: a first multiplexer 11 for the selective passage of positive values and a second multiplexer 12 for the selective passage of negative values. Each multiplexer 11, 12 is enabled by the polarity of the incoming value through lines 16 and 17, i.e. if the value of input D1 is a negative value, it will enable multiplexer 12 through its inverting ENABLE input.

All of the "positive" multiplexers 11 are connected to a positive adder 13 whilst all of the negative multiplexers 12 are connected to a negative adder 14. If any of the differences D1-D24 is positive then the value D+ in the positive adder 13 is increased according to the difference itself, otherwise the value D- in the negative adder 14 is increased accordingly.

The outputs of the adders 13 and 14 are connected to a fuzzy processor 15 which is adapted to establish the smoothing action.

If the value of D+ is HIGH and the value of D- is LOW then almost all the differences D1-D24 outlined by the mask are positive. This means that almost all of the pixels P1-P24 of the mask have lighter gray levels than the central pixel X. It would therefore appear that the central pixel X has been fired by a negative peak of gaussian noise and must therefore be taken back to a higher gray level. A similar rule can be implemented for the symmetrical case when a positive peak of noise occurs. The rules adopted for the smoothing action are consequently:

IF D+ is HIGH AND D- is LOW THEN FLAT$_{action}$ IS HP
IF D+ is LOW AND D- is HIGH THEN FLAT$_{action}$ IS HN
IF D+ is MED AND D- is LOW THEN FLAT$_{action}$ IS MP
IF D+ is LOW AND D- is MED THEN FLAT$_{action}$ IS MN

where HP and MP stand respectively for high positive and medium positive and similarly HN and MN stand for high negative and medium negative and FLAT$_{action}$ is the output of the fuzzy processing means 15 and of the fuzzy flat area smoothing means 8.

Therefore, the fuzzy process performed by the fuzzy processing means 15 implements some fuzzy IF-THEN rules with two antecendents and one consequent in order to establish the correct smoothing action.

It is however important to stress that this action is not the final smoothing action but has to be combined with the action provided by the edge preserving smoothing means 9.

The edge preserving smoothing means 9 are adapted to perform low-pass filtering on a region that has been considered to be not properly homogeneous by the region voter means 4. This distinction of the type of filtering is necessary if the edge preserving smoothing means 9 are required; in fact, in this manner, the new output value is less affected by the sharp differences of gray levels occurring proximate to an edge.

Edge Preserving Smoothing is accomplished by employing several templates so that it is possible to understand the correct topology of the region of the image outlined by the study mask.

For each predefined template, two simultaneous processes are performed: Fuzzy Template Matching and Fuzzy Edge Smoothing.

Fuzzy Template Matching establishes how much the region outlined by the study mask resembles a particular template. This operation provides a degree of confidence for considering the edge located in the same position as in the one of the predefined template considered.

Fuzzy Template Smoothing, on the other hand, reduces noise effects whilst knowing the structure of the image. In this manner, the smoothing action is not excessively affected by the sharp changes in gray levels occurred with the edges.

Therefore, for each predefined template, a smoothing action is provided in two computational steps: Fuzzy Template Smoothing is accomplished to provide the entity of the smoothing action and Fuzzy Template Matching is used to evaluate the degree of resemblance of the considered template to the particular part of the image outlined by the study mask.

The edge preserving smoothing means are more clearly shown in figure 6. Since these means deal with non-homogeneous regions (high-pass information) they receive at their inputs the differences D1-D8 of the gray levels which are given by the smaller 3x3 sub-window. The difference levels are provided by the difference means 2. Such difference levels are sent to a fuzzy template matcher 18 which is adapted to perform the Fuzzy Template Matching and to a fuzzy template smoother 19 which is adapted to perform the Fuzzy Template Smoothing.

The fuzzy template matcher 18 is adapted to evaluate to which extent the region of the image outlined by the 3x3 window matches with one of the predefined templates. Examples of the predefined templates are shown in figure 7. The comparison with all of the predefined templates allows to understand the real topology of the region of the image outlined by the study mask. By knowing to which kind of template the region under study looks like the most, it is possible to perform a smoothing action without spoiling the output pixel with the sharp differences of the edge. In this manner, high-pass information is certainly preserved.

The fuzzy template matcher 18 calculates a parameter $K_i$ which is used for evaluating the topology of the considered area. Such parameter is given by the following expression:

$$K_i = \frac{\sum\limits_{i=1}^{6} |P_i - X|}{5}$$

where $P_i$ represents gray levels of the pixels belonging to the study mask and X is the gray level of the central pixel to be elaborated. Therefore the parameter $K_i$ is a sum of differences divided by the number of pixels considered only for each template. It is important to point out that the differences are computed considering only the pixels that do not belong to an edge, i.e. the pixels not darkened in figure 7.

If the region of the image outlined by the study mask resembles a particular template, then, certainly, the parameter $K_i$ will have small values. According to this parameter a fuzzy process is performed by the fuzzy template matcher 18 to evaluate the degree of likehood between the region under study and a considered template. Such fuzzy process is similar to the one implemented by the region voter means 4 but on a different kind of area.

It is important to stress that, differently from the region voter means 4, no calculation of the average among the pixels of the mask has to be computed. This presents a significant reduction from a computational point of view, since the average computation operation should have been evaluated for each template, considering every time different "homogeneous" pixels. With the present solution, instead, all the differences are computed only once for all the considered templates and during the evaluation of the matching degree between the region of the image and each template, only the useful differences are employed.

The smoothing of a non uniform region (Fuzzy Template Smoothing) is performed by the fuzzy template smoother 19. The configuration of this smoother 19 is completely similar to the fuzzy flat area smoother 8 (figure 5). The only difference is that the smoothing action is computed by considering the existence of an edge. Again the differences D1-D8 among the gray levels of the pixels P1-P8 of the 3x3 study mask and of the central pixel X are computed. If the differences are positive then the value D+ of the positive adder is increased by the differences themselves, otherwise the value D- of the negative adder is increased. According to the sign of these differences with a fuzzy logic based process an output value of the smoothing action $Sm_i$ is computed.

The overall filtering action $EDGE_{action}$ provided by the edge preserving smoothing means 9 is a weighted sum of the smoothing action $Sm_i$ and of the parameters $K_i$ evaluated by the fuzzy template matcher 18. Therefore, $K_i$ is the level of activation of each template while $Sm_i$ is the smoothing action provided by the fuzzy filter always on each predefined template.

In this particular embodiment only eight templates have been used. The overall smoothing action performed by the edge preserving smoothing means is calculated by processing means 20 according to the following expression:

$$EDGE_{action} = \frac{\sum\limits_{i=1}^{8} |K_i * Sm_i|}{8}$$

Finally, the output $FLAT_{action}$ of the fuzzy flat area smoothing means 8 and the output $EDGE_{action}$ of the edge preserving smoothing means 9 are sent to the soft switching means 10 which are adapted to perform the soft switching between the two different smoothing actions. The weight of the two actions is computed according to the parameter $K_{edge}$ sorted out initially by the region voter means 4, precisely the Fuzzy Flat Smoothing Action - $FLAT_{action}$ is weighted with the value $K_{edge}$ whilst the Edge Preserving Smoothing Action - $EDGE_{action}$ is applied with the weight $(1- K_{edge})$.

As a matter of fact this weighted sum corresponds to the implementation of a fuzzy IF...THEN...ELSE rule where the THEN part is represented by the Fuzzy Flat Smoothing and the ELSE part is represented by the Edge Preserving Smoothing.

In that manner, the soft switching means 10 generate a new output value OUT of pixel X which is being processed.

It is important to stress that the structure of all the blocks described is very simple: most of the blocks require the same operations such as computing the differences among the gray levels of the pixels belonging to the study mask and of the central pixel to be elaborated. All the division operations introduced are given by a division for a constant and consequently are very easy to implement from a hardware point of view. Even the dimensions of the memories employed for storing the fuzzy processes are very restricted.

Therefore a device for noise reduction on video signal has been provided. An efficient smoothing action is performed thanks to the capability of understanding the real topology of the image under process. The soft switching means allow to merge together the two filtering actions performed respectively on a region of the image considered homogeneous and on the one with many high-pass details.

The result of merging a classical approach with a fuzzy logic based approach accomplishes a smoother action with good behaviour both for achieving noise reduction features and for preserving high-pass information (edges). The table-like approach for the fuzzy information storage guarantees the possibility of a very simple implementation.

The invention thus conceived is susceptible to numerous modifications and variations, all of which are within the scope of the inventive concept.

For example masks having different sizes may be used, as well as a larger and more varied group of templates.

Finally, all the details may be replaced with other technically equivalent ones.

In practice, the materials employed, as well as the shapes and dimensions, may be any according to the requirements without thereby abandoning the scope of the protection of the following claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

### Claims

1. A fuzzy device for image noise reduction, comprising:

   interface means (1) adapted to receive the gray level of a pixel (X) to be processed of an image and of neighbouring pixels (P1-P24);
   difference means (2) connected to said interface means (1) and adapted to generate a difference ($D_i$) of the gray levels between said neighbouring pixels (P1-P24) and said pixel (X) to be processed;

   characterized in that it further comprises:

   fuzzy flat area smoothing means (8) connected to said difference means (2) and adapted to perform a low-pass smoothing of an almost homogeneous region defined by said pixel (X) and said neighbouring pixels (P1-P24), said almost homogeneous region being a region in which a very slight difference of the gray levels between said pixel (X) to be processed and neighbouring pixels (P1-P24) exists, said fuzzy flat area smoothing means (8) comprising
   a positive adder (13) adapted to add the positive differences ($D_i$) generated by said difference means (2);
   a negative adder (14) adapted to add the negative differences ($D_i$) generated by said difference means (2);
   fuzzy processing means (15) adapted to apply fuzzy inference on the sums of said negative and said positive differences ($D_i$) in order to generate an output ($FLAT_{ACTION}$) of said fuzzy flat area smoothing means (8);
   edge preserving smoothing means (9) connected to said difference means (2) and adapted to perform low-pass filtering on a high-pass information region (P1-P8, X) defined by said pixel and said neighbouring pixels, said edge preserving smoothing means (9) comprising:
   a fuzzy template matcher (18) adapted to evaluate a resemblance ($K_i$) between said region defined by said pixel (X) and said neighbouring pixels (P1-P24) and any one of a plurality of templates;
   a fuzzy template smoother (19) adapted to perform low-pass filtering on said high-pass information region defined by said pixel (X) and said neighbouring pixels (P1-P24);
   processing means (20) connected to the outputs ($K_i$, $Sm_i$) of said fuzzy template matcher (18) and said fuzzy template smoother (19) and adapted to generate a weighted sum ($EDGE_{ACTION}$) of said outputs of said fuzzy template matcher (18) and said fuzzy template smoother (19);
   said weighted sum ($EDGE_{ACTION}$) being the output of said edge preserving means (9);
   region evaluation means (4) connected to said interface means (1) and adapted to evaluate the degree or grade of membership ($K_{EDGE}$) to which said region defined by said pixel (X) and said neighbouring pixels (P1-P24) belongs to a fuzzy set defining said region as homogeneous; and
   soft switching means (10) connected to the outputs of said smoothing means (8, 9) and adapted to perform the weighting of the respective said outputs (FLAT$_{ACTION}$, EDGE$_{ACTION}$) of said smoothing means (8, 9) on the basis of said degree of membership (K$_{EDGE}$) provided by said region evaluation means (4).

2. A fuzzy device, according to claim 1, characterized in that said almost homogeneous region is larger than said high-pass information region.

3. A fuzzy device, according to one or more of the preceding claims, characterized in that said fuzzy template matcher (18) generates a value representative of the level of activation of each of said templates.

4. A fuzzy device, according to one or more of the preceding claims, characterized in that the fuzzy template smoother (19) is adapted to provide a value representative of the filtering action performed on each of said templates.

5. A fuzzy device, according to one or more of the preceding claims, characterized in that said region evaluation means (4) comprise

   average calculating means (5) adapted to calculate the average gray level value (x$_{ave}$) of said pixel (X) and of said neighbouring pixels (P1-P24);
   parameter evaluating means (6) adapted to calculate the degree (p) of homogeneity of said region defined by said pixel (X) and by said neighbouring pixels (P1-P24);
   second fuzzy processing means (7) adapted to generate said degree of membership (K$_{EDGE}$) for considering whether said region defined by said pixel and by said neighbouring pixels is almost homogeneous.

6. A fuzzy device, according to one or more of the preceding claims, characterized in that said difference means (2) comprise a subtractor (3) adapted to generate a difference (D$_i$) of the gray levels between said neighbouring pixels (P1-P24) and said pixel (X) to be processed.

**Patentansprüche**

1. Fuzzy-Vorrichtung zur Verringerung von Bildrauschen, umfassend:

   Interface-Mittel (1), angepaßt zum Empfangen des Grauwertes eines zu bearbeitenden Pixels (X) eines Bildes und benachbarter Pixel (P1-P24);
   Differenz-Mittel (2), verbunden mit den Interface-Mitteln (1) und angepaßt zum Erzeugen einer Differenz (D$_i$) von Grauwerten zwischen den benachbarten Pixeln (P1-P24) und dem zu bearbeitenden Pixel (X);

   dadurch gekennzeichnet, daß sie weiterhin umfaßt:

   Fuzzy-Glättungsmittel für flache Gebiete (8), die an die Differenz-Mittel (2) angeschlossen sind und angepaßt sind, um eine Tiefpaß-Glättung eines fast homogenen Bereiches durchzuführen, der durch den Pixel (X) und die benachbarten Pixel (P1-P24) definiert ist, und der ein Bereich ist, in dem eine sehr geringe Differenz der Grauwerte zwischen dem zu bearbeitenden Pixel (X) und den benachbarten Pixeln (P1-P24) besteht, wobei die Fuzzy-Glättungsmittel für flache Gebiete (8) umfassen:
   einen positiven Addierer (13), der zum Addieren der von den Differenz-Mitteln (2) erzeugten positiven Differenz (D$_i$) angepaßt ist;
   einen negativen Addierer (14), der angepaßt ist, um die von den Differenz-Mitteln (2) erzeugte negative Differenz (D$_i$) zu addieren;
   Fuzzy-Bearbeitungsmittel (15), angepaßt zum Anwenden von Fuzzy-Inferenz auf die Summe der negativen und der positiven Differenzen (D$_i$) um ein Ausgangssignal (FLAT$_{ACTION}$) der Fuzzy-Glättungsmittel für flache Gebiete (B) zu erzeugen;
   kantenerhaltende Glättungsmittel (9), die an die Differenz-Mittel (2) angeschlossen sind und angepaßt sind, um eine Tiefpaß-Filterung eines Hochpaß-Informationsbereiches (P1-P8, X) auszuführen, der durch den Pixel und die benachbarten Pixel definiert ist, wobei die kantenerhaltenden Glättungsmittel (9) umfassen:
   einen Fuzzy-Schablonen-Abgleicher (18), angepaßt zum Auswerten einer Ähnlichkeit (K$_i$) zwischen dem von dem Pixel (X) und den benachbarten Pixeln (P1-P24) definierten Bereich und irgendeiner einer Vielzahl von Schablonen;
   einem Fuzzy-Schablonen-Glätter (19), angepaßt zum Ausführen einer Tiefpaß-Filterung in dem Hochpaß-Informationsbereich, der durch den Pixel (X) und die benachbarten Pixel (P1-P24) definiert ist;

Bearbeitungsmittel (29), die mit den Ausgängen ($K_i$, $Sm_i$) des Fuzzy-Schablonen-Abgleichers (18) und des Fuzzy-Schablonen-Glätters (19) verbunden sind und zum Erzeugen einer gewichteten Summe ($EDGE_{ACTION}$) der Ausgangssignale des Fuzzy-Maskenabgleichers (18) und Fuzzy-Maskenglätters (19) angepaßt sind; wobei die gewichtete Summe ($EDGE_{ACTION}$) das Ausgangssignal der kanten-erhaltenen Mittel (9) ist; Bereichauswertungsmittel (4) verbunden mit den Interface-Mitteln (1) und angepaßt zum Auswerten der Ordnung oder des Grades der Zugehörigkeit ($K_{EDGE}$) mit welchen der von dem Pixel (X) und den benachbarten Pixeln (P1-P24) definierte Bereich zu einer Fuzzy-Menge gehört, die den Bereich als homogen definiert; und weiche Schaltmittel (10), verbunden mit den Ausgängen der Glättungsmittel (8, 9) und angepaßt zum Ausführen der Gewichtung der entsprechenden Ausgangssignale ($FLAT_{ACTION}$, $EDGE_{ACTION}$) der Glättungsmittel (8, 9) auf Basis der von den Bereichauswertungsmitteln (4) gelieferten Ordnung der Mitgliedschaft ($K_{EDGE}$).

2. Fuzzy-Vorrichtung nach Anspruch 1,
dadurch gekennzeichnet, daß der fast homogene Bereich größer ist als der Hochpaß-Informationsbereich.

3. Fuzzy-Vorrichtung, nach einem oder mehreren der vorstehenden Ansprüche,
dadurch gekennzeichnet, daß der Fuzzy-Schablonen-Abgleicher (10) einen für den Aktivierungsgrad jeder der Schablonen repräsentiven Wert erzeugt.

4. Fuzzy-Vorrichtung gemäß eines oder mehrerer der vorstehenden Ansprüche,
dadurch gekennzeichnet, daß der Fuzzy-Schablonen-Glätter (19) angepaßt ist, um einen Wert zu liefern, der für die für jede der Schablonen ausgeführte Filtertätigkeit repräsentativ ist.

5. Fuzzy-Vorrichtung, gemäß eines oder mehrerer der vorstehenden Ansprüche,
dadurch gekennzeichnet, daß die Bereichsauswertungsmittel (4) umfassen:

Mittelwertberechnungsmittel (5), angepaßt zum Berechnen des mittleren Grauwertes ($X_{ave}$) des Pixels (X) und der benachbarten Pixel (P1-P24);
Parameterauswertungsmittel (6), angepaßt zum Berechnen des Grades (p) der Homogenität des von dem Pixel (X) und den benachbarten Pixeln (P1-P24) definierten Bereiches;
zweite Fuzzy-Berechnungsmittel (7), angepaßt zum Erzeugen des Grades der Zugehörigkeit ($K_{EDGE}$) zum Bewerten, ob der von dem Pixel und dem benachbarten Pixeln definierte Bereich fast homogen ist.

6. Fuzzy-Vorrichtung gemäß eines oder mehrerer der vorstehenden Ansprüche, dadurch gekennzeichnet, daß die Differenz-Mittel (2) einen Substraktor (3) umfassen, der angepaßt ist um eine Differenz ($D_i$) von Grauwerten zwischen den benachbarten Pixeln (P1-P24) und dem zu bearbeitenden Pixel (X) zu erzeugen.

## Revendications

1. Dispositif en logique floue pour réduire le bruit d'image, comprenant :

un moyen d'interface (1) adapté à recevoir le niveau de gris d'un pixel à traiter (X) et de pixels voisins (P1-P24) d'une image ;
un moyen de différence (2) connecté au moyen d'interface (1) et adapté à produire une différence ($D_i$) des niveaux de gris entre les pixels voisins (P1-P24) et le pixel à traiter (X) ;

caractérisé en ce qu'il comprend en outre :

un moyen de lissage flou de zone plate (8) connecté au moyen de différence (2) et adapté à réaliser un lissage passe-bas d'une région presque homogène définie par ledit pixel (X) et les pixels voisins (P1-P24), la région presque homogène étant une région dans laquelle il existe une très petite différence de niveau de gris entre le pixel à traiter (X) et les pixels voisins (P1-P24), le moyen de lissage flou de zone plate (8) comprenant : un additionneur positif (13) propre à ajouter les différences positives ($D_i$) produites par le moyen de différence (2) ;
un additionneur négatif (14) propre à ajouter les différences négatives ($D_i$) produites par le moyen de différence (2) ;
un moyen de traitement flou (15) adapté à appliquer une inférence floue aux sommes des différences positives et négatives ($D_i$) pour produire une sortie ($FLAT_{ACTION}$) du moyen de lissage flou de zone plate (8) ;

un moyen de lissage à préservation de bord (9) connecté au moyen de différence (2) et adapté à réaliser un filtrage passe-bas sur une région d'information passe-haut (P1-P8, X) définie par le pixel et les pixels voisins, le moyen de lissage à préservation de bord (9) comprenant :

un adaptateur de gabarit flou (18) adapté à évaluer une ressemblance ($K_i$) entre la région définie par ledit pixel (X) et les pixels voisins (P1-P24) et l'un quelconque de plusieurs gabarits ;

un lisseur de gabarit flou (19) adapté à réaliser un filtrage passe-bas sur la région d'information passe-haut définie par ledit pixel (X) et les pixels voisins (P1-P24) ;

un moyen de traitement (20) connecté aux sorties ($K_i$, $Sm_i$) de l'adaptateur de gabarit flou (18) et au lisseur de gabarit flou (19) et adapté à fournir une somme pondérée ($EDGE_{ACTION}$) des sorties de l'adaptateur de gabarit flou (18) et du lisseur de gabarit flou (19) ;

ladite somme pondérée ($EDGE_{ACTION}$) étant la sortie du moyen de préservation de bord (9) ;

un moyen d'évaluation de région (4) connecté au moyen d'interface (1) et adapté à évaluer le degré ou le niveau d'appartenance ($K_{EDGE}$) selon lequel la région définie par ledit pixel (X) et les pixels voisins (P1-P24) appartient à un ensemble flou définissant la région comme homogène ; et

un moyen de commutation douce (10) connecté aux sorties du moyen de lissage (8, 9) et adapté à réaliser la pondération des sorties respectives ($FLAT_{ACTION}$, $EDGE_{ACTION}$) du moyen de lissage (8, 9) sur la base du degré d'appartenance ($K_{EDGE}$) fourni par le moyen d'évaluation de région (4).

2. Dispositif en logique floue selon la revendication 1, caractérisé en ce que ladite région presque homogène est plus grande que ladite région d'information passe-haut.

3. Dispositif en logique floue selon une ou plusieurs des revendications précédentes, caractérisé en ce que l'adaptateur de gabarit flou (18) produit une valeur représentative du niveau d'activation de chacun des gabarits.

4. Dispositif en logique floue selon une ou plusieurs des revendications précédentes, caractérisé en ce que le lisseur de gabarit flou (19) est adapté à fournir une valeur représentative de l'action de filtrage réalisée sur chacun des gabarits.

5. Dispositif en logique floue selon une ou plusieurs des revendications précédentes, caractérisé en ce que ledit moyen d'évaluation de région (4) comprend :

un moyen de calcul de moyenne (5) adapté à calculer la valeur de niveau moyen de gris ($x_{ave}$) dudit pixel (X) et des pixels voisins (P1-P24) ;

un moyen d'évaluation de paramètre (6) adapté à calculer le degré (P) d'homogénéité de la région définie par ledit pixel (X) et les pixels voisins (P1-P24) ;

un second moyen de traitement flou (7) adapté à produire le degré d'appartenance ($K_{EDGE}$) pour déterminer si la région définie par ledit pixel et les pixels voisins est presque homogène.

6. Dispositif en logique floue selon une ou plusieurs des revendications précédentes, caractérisé en ce que le moyen de différence (2) comprend un soustracteur (3) adapté à fournir la différence ($D_i$) de niveau de gris entre des pixels voisins (P1-P24) et le pixel à traiter (X).

Fig.1

Fig.2

Fig.2a

Fig.3

Fig.4

Fig.5

Fig.7

Fig.6